# EUROPÄISCHE PATENTANMELDUNG

(11) **EP 1 213 122 A1**
(43) Veröffentlichungstag der Anmeldung: **12.06.2002**
(21) Anmeldenummer: 01127789.4
(22) Anmeldetag: 22.11.2001
(51) Int. Cl.: B29C 47/06, B29C 47/28, B29C 47/70

(54) **Werkzeug zur Extrusion eines rohrförmigen Stranges aus mindestens einer thermoplastischen Kunststoffschmelze für die Herstellung von Blasfolien**

(30) Priorität: 29.11.2000 DE 10059306
(71) Anmelder: Reifenhäuser GmbH & Co. Maschinenfabrik, 53839 Troisdorf (DE)
(72) Erfinder: Rübhausen, Anton, 53859 Niederkassel (DE)
(74) Vertreter: Müller-Gerbes, Margot, Dipl.-Ing.

(57) **Zusammenfassung**

Die Erfindung betrifft einen Werkzeugkopf zur Extrusion eines rohrförmigen Stranges aus mindestens einer thermoplastischen Kunststoffschmelze für die Herstellung von Blasfolien, enthaltend ein Innenwerkzeug (2) und ein Außenwerkzeug (3), zwischen denen ein Ringspaltraum ausgebildet ist, wobei das Außenwerkzeug mindestens eine Werkzeugstufe (3.1) mit zwei übereinander angeordneten Werkzeugteilen umfaßt und zwischen den Werkzeugteilen eine in den Ringspaltraum einmündende Trennfuge ausgebildet ist und in jeder Werkzeugstufe ein Kanalsystem (5) für die Zuführung der Kunststoffschmelze in den Ringspaltraum ausgebildet ist, wobei das Kanalsystem einen Eintrittsbereich, einen Verzweigungsbereich und einen Spiralbereich umfaßt, die jeweils auf einer separaten Ebene liegen, wobei die Ebene des Eintrittsbereiches zwischen der Ebene des Verzweigungsbereiches und der Ebene des Spiralbereiches angeordnet ist und eine Gruppe von ersten Verbindungskanälen vom Eintrittsbereich in den Verzweigungsbereich führen und eine Gruppe von zweiten Verbindungskanälen vom Verzweigungsbereich in den Spiralbereich führen.

## Beschreibung

Die Erfindung betrifft einen Werkzeugkopf mit einer Düse zur Extrusion eines rohrförmigen Stranges aus mindestens einer thermoplastischen Kunststoffschmelze für die Herstellung von Blasfolien, wobei der Werkzeugkopf ein um eine Mittelachse angeordnetes Innenwerkzeug und ein Außenwerkzeug enthält und zwischen Innenwerkzeug und Außenwerkzeug ein Ringspaltraum ausgebildet ist, und der Ringspaltraum sich konzentrisch zur Mittelachse erstreckt und in die Düse mündet und das Außenwerkzeug mindestens eine Werkzeugstufe mit zwei aufeinander angeordneten ringförmig und plattenförmig ausgebildeten Werkzeugteilen umfaßt und zwischen den zwei Werkzeugteilen einer jeden Werkzeugstufe eine in den Ringspaltraum einmündende Trennfuge ausgebildet ist und jede Werkzeugstufe mit einer Zuführleitung für eine Kunststoffschmelze ausgerüstet ist und in jeder Werkzeugstufe ein Kanalsystem für die Verteilung der Kunststoffschmelze bis in den Ringspaltraum ausgebildet ist.

Das Kanalsystem für die Verteilung einer Kunststoffschmelze in den Ringspaltraum eines Werkzeugkopfes spielt eine wesentliche Rolle für die Erzielung einer gleichmäßigen Produktqualität, da mittels des Kanalsystems eine gleichmäßige Verteilung des üblicherweise über einen peripheren Kanal zugeführten geschmolzenen thermoplastischen Kunststoffes in möglichst gleichmäßigen Anteilen in den gesamten Ringspaltraum erfolgen soll. Man unterscheidet hier zwischen Bauformen mit sogenannten vertikalen Wendelverteilern, bei denen ein Kanalsystem zum Verteilen der Kunststoffschmelze in axialer Richtung des Werkzeugkopfes angeordnet ist, wozu beispielsweise auf die U.S. 4,182,603 verwiesen wird.

Des weiteren sind Werkzeugköpfe gemäß der U.S. 4,895,744 und U.S. 5,069,612 bekannt, bei denen der Werkzeugkopf aus mehreren Werkzeugstufen modulartig aufgebaut ist, wobei jede Werkzeugstufe ein Kanalsystem zum Verteilen der zugeführten Kunststoffschmelze aufweist, das auf konischen Flächen in axialer Richtung des Werkzeugkopfes zum Ringspaltraum verlaufend ausgebildet ist.

Aus der U.S. 3,809,515 ist bereits ein Werkzeugkopf für die Herstellung von Blasfolien bekannt, bei dem der Werkzeugkopf senkrecht zu seiner Mittelachse in Werkzeugstufen unterteilt ist und das Kanalsystem zur Verteilung der Schmelze senkrecht zur Achsrichtung angeordnet ist, wobei die Kunststoffschmelze zentral in der Mittelachse zugeführt wird und von hier radial nach außen in den Ringspaltraum verteilt wird.

Aus der DE 42 18 095 C2 ist ein Werkzeugkopf zum Herstellen einer Blasfolie bekannt, bei dem das Kanalsystem innerhalb des Werkzeugkopfes in einer senkrecht zur Achse des Werkzeugkopfes verlaufenden Ebene ausgebildet ist, wobei die Zuführung der Kunststoffschmelze von außen erfolgt und die Kunststoffschmelze von außen nach innen verlaufend verteilt wird.

Aus der FR 26 25 941 ist ein Werkzeugkopf zum Herstellen von ein- oder mehrschichtigen Schlauchfolien bekannt, bei dem der Werkzeugkopf ebenfalls senkrecht zu seiner Achsrichtung in eine Vielzahl von Werkzeugstufen, die jeweils aus einer Ringplatte bestehen, unterteilt ist. Das Kanalsystem für die Verteilung der Schmelze ist nun auf die einzelnen Ringplatten des Werkzeugkopfes verteilt, d. h. von der Zufuhr der Kunststoffschmelze am Umfang des Werkzeugkopfes bis zum Eintritt in den Ringspaltraum durchläuft das Kanalsystem und damit die Kunststoffschmelze fünf Ringplatten, welche eine Werkzeugstufe bilden.

Werkzeugköpfe mit mehreren Werkzeugstufen ermöglichen das Extrudieren mehrschichtiger rohrförmiger Stränge aus unterschiedlichen thermoplastischen Kunststoffschmelzen, die nachfolgend zu entsprechend mehrschichtigen Blasfolien aufgeblasen werden. Ein möglichst kompakter und raumsparender Aufbau des Werkzeugkopfes mit einer Vielzahl von gleichen Teilen zur Ausbildung der einzelnen Werkzeugstufen für die Zufuhr jeweils einer Kunststoffschmelze wird angestrebt, um niedrige Herstellungsund Betriebskosten sicherstellen zu können. Eine Modulbauweise der Werkzeugstufen mit möglichst einfacher Montage und Demontage ist angestrebt. Gleichzeitig soll eine möglichst homogene und gleichmäßige Verteilung der zugeführten Kunststoffschmelze in dem Kanalsystem jeder Werkzeugstufe erfolgen, wobei auch thermoplastische Kunststoffschmelzen aus unterschiedlichen Rohstoffen in einem Werkzeugkopf verarbeitet werden sollen und eine gleichmäßige Schmelzeverteilung und Zufuhr der Schmelze in den Ringspaltraum sichergestellt werden soll.

Die Erfindung hat sich die Aufgabe gestellt, einen Werkzeugkopf der gattungsgemäßen Art vorzuschlagen, der sich einerseits durch eine besonders kompakte und raumsparende Ausgestaltung auszeichnet, andererseits ein effizientes Kanalsystem zur Verteilung der Kunststoffschmelze bietet, welches eine möglichst gleichmäßige Verteilung der Kunststoffschmelze auf kurzem Wege in den Ringspaltraum und damit eine gleichförmige Extrusion auch unterschiedlicher Rohstoffe zu einer ein- oder mehrschichtigen Blasfolie ermöglicht. Der Werkzeugkopf soll aus Werkzeugstufen mit einer möglichst großen Anzahl untereinander gleicher Teile und auch mit einfach herzustellenden Teilen aufbaubar sein.

Zur Lösung der eingangs gestellten Aufgabe schlägt die Erfindung die Ausgestaltung eines Werkzeugkopfes gemäß den Merkmalen des Patentanspruches 1 vor.

Vorteilhafte Ausgestaltungen und Weiterbildungen des erfindungsgemäßen Werkzeugkopfes sind Gegenstand der Unteransprüche.

Die Lösung der vorangehend dargelegten Aufgabe wird erfindungsgemäß bei einem gattungsgemäßen Werkzeugkopf darin gesehen, daß das Kanalsystem jeder Werkzeugstufe einen Eintrittsbereich, einen Verzweigungsbereich und einen Spiralbereich umfaßt, wobei der Spiralbereich in einer ringförmigen Verteilfläche mit einer ringförmigen Austrittsöffnung in den Ringspaltraum mündet und der Eintrittsbereich, der Verzweigungsbereich und der Spiralbereich des Kanalsystems sich jeweils in einer separaten Ebene erstrecken, wobei die Ebene des Eintrittsbereiches sich zwischen der Ebene des Verzweigungsbereiches und der Ebene des Spiralbereiches erstreckt und das Kanalsystem des Eintrittsbereiches mittels einer ersten Gruppe von Verbindungskanälen, die von der Ebene des Eintrittsbereiches in die Ebene des Verzweigungsbereiches führen, mit dem Kanalsystem des Verzweigungsbereiches verbunden ist und das Kanalsystem des Verzweigungsbereiches mittels einer zweiten Gruppe von Verbindungskanälen, die von der Ebene des Verzweigungsbereiches in die Ebene des Spiralbereiches führen, mit dem Kanalsystem des Spiralbereiches verbunden ist.

Zur Schaffung der erfindungsgemäß angestrebten besonders kompakten und variablen Modulbauweise und gleichförmigen Verteilung der Kunststoffschmelze innerhalb des Werkzeugkopfes bzw. jeder Werkzeugstufe wird das Kanalsystem unterteilt und dem Spiralbereich ein Eintrittsbereich und ein Verzweigungsbereich vorgelagert, wodurch bereits eine effektive Vorverteilung der zugeführten Kunststoffschmelze bewirkt wird. Darüber hinaus sind sämtliche Verteilungsbereiche des erfindungsgemäß gestalteten Kanalsystems einer Werkzeugstufe des Werkzeugkopfes auf unterschiedlichen Ebenen angeordnet, so daß sich eine besonders raumsparende Gestaltung des erfindungsgemäßen Werkzeugkopfes aus einer Mehrzahl von Werkzeugstufen ergibt und die Gleichförmigkeit der Schmelzeverteilung ebenfalls erreicht wird.

Erfindungsgemäß durchläuft die einer Werkzeugstufe des erfindungsgemäßen Werkzeugkopfes in an sich bekannter Weise zugeführte Kunststoffschmelze zunächst einen Eintrittsbereich auf einer mittleren Ebene, wird von dort über eine Gruppe von ersten Verbindungskanälen in eine zweite Ebene überführt, die als Verzweigungsbereich bezeichnet wird und eine Vielzahl von Verzweigungskanälen umfaßt und gelangt am Ende der Verzweigungskanäle über eine Gruppe von zweiten Verbindungskanälen schließlich in eine dritte Ebene, in welcher die Spiralkanäle angeordnet sind, die den Spiralbereich bilden und die gleichförmige Zuführung des geschmolzenen Kunststoffes in den Ringspaltraum bewirken. Aufgrund der gewählten Anordnung mit einer zwischen der Ebenen des Verzweigungsbereiches und der Ebene des Spiralbereiches angeordneten Ebene des Eintrittsbereiches durchtritt die Kunststoffschmelze beim Übergang aus dem Verzweigungsbereich in den Spiralbereich über die Gruppe von zweiten Verbindungskanälen die Ebene des Eintrittsbereiches, so daß eine äußerst kompakte Mehrfachverzweigung geschaffen wird.

Jede Werkzeugstufe des erfindungsgemäßen Werkzeugkopfes ist von zwei Werkzeugteilen gebildet, die stapelartig übereinander angeordnet sind und zwischen denen eine Trennfuge ausgebildet ist, die zur Zuführung der vom Kanalsystem gleichmäßig verteilten Kunststoffschmelze in den Ringspaltraum genutzt wird, indem entlang der Trennfuge die an den Spiralbereich sich anschließende Verteilfläche zum Ringspaltraum hin verläuft.

Erfindungsgemäß wird vorgeschlagen, das Kanalsystem nur in einem Werkzeugteil jeder Werkzeugstufe auszubilden. Bevorzugt ist vorgesehen, daß das Kanalsystem mit Eintrittsbereich, Verzweigungsbereich, Spiralbereich und den beiden Gruppen von Verbindungskanälen in dem der Düse abgewandten, als unteres Werkzeugteil bezeichneten Werkzeugteil einer jeden Werkzeugstufe ausgebildet ist und das zweite, als oberes Werkzeugteil bezeichnete Werkzeugteil auf die mit dem Spiralbereich ausgebildete Oberfläche des unteren Werkzeugteiles unter Ausbildung der Trennfuge aufgesetzt ist. Die Werkzeugteile sind insbesondere ringförmig und plattenförmig oder scheibenförmig ausgebildet. Insbesondere wird vorgesehen, daß der Spiralbereich des Kanalsystems in der der Trennfuge zugewandten Oberfläche des unteren Werkzeugteiles, der Verzweigungsbereich des Kanalsystems in der gegenüberliegenden, von der Trennfuge abgewandten Oberfläche des unteren Werkzeugteiles und der Eintrittsbereich des Kanalsystems zwischen diesen Oberflächen innerhalb des unteren Werkzeugteiles ausgebildet ist. Die erfindungsgemäß vorgeschlagenen drei Ebenen des Kanalsystems in einer Werkzeugstufe zur gleichmäßigen Verteilung der der Werkzeugstufe zugeführten Kunststoffschmelze werden somit in lediglich einem Werkzeugteil, d. h. einem Bauteil einer jeden Werkzeugstufe realisiert, nämlich der Spiralbereich und der Verzweigungsbereich an der Ober- und Unterseite des einen Werkzeugteiles und der Eintrittsbereich zwischen diesen beiden Ebenen innerhalb desselben Werkzeugteiles.

Für die Ausbildung der Strömungsquerschnitte für die Kunststoffsysteme ist das Kanalsystem des Spiralbereiches von an sich bekannten Spiralkanälen gebildet und das Kanalsystem des Verzweigungsbereiches von sich verzweigenden Verzweigungskanälen, wobei die den Spiralbereich bildenden Spiralkanäle und/oder die den Verzweigungsbereich bildenden Verzweigungskanäle nutartig in die Oberflächen des einen Werkzeugteiles eingearbeitet, beispielsweise eingefräst sind.

Aufwendiger ist es, was jedoch im Rahmen der Ausführung der Erfindung ebenfalls möglich ist, die Spiralkanäle, die den Spiralbereich bilden, beidseitig der Spiralebene sowohl in der Oberfläche des unteren Werkzeugteiles als auch komplementär in der Oberfläche des angrenzenden oberen Werkzeugteiles entlang der Trennfuge auszubilden.

Gemäß einem weiteren Vorschlag der Erfindung ist es auch möglich, das mit dem Kanalsystem ausgebildete untere Werkzeugteil einer Werkzeugstufe auf der mit den Spiralkanälen versehenen Oberfläche gegenüberliegenden Oberfläche mit einer umlaufenden Ringnut auszubilden, in die ein Vorverteilring einsetzbar ist, wobei der Vorverteilring eine am Nutgrund der Ringnut anliegende Oberfläche aufweist und der Verzweigungsbereich an der Oberfläche des unteren Werkzeugteiles im Bereich des Nutgrundes der Ringnut ausgebildet ist. Auf diese Weise ist es möglich, die Ebene des Verzweigungsbereiches aus der Teilungsfuge zweier benachbarter Werkzeugstufen herauszuverlegen und mittels des in die Ringnut eingesetzten Vorverteilringes abzudichten.

Die den Verzweigungsbereich bildenden Verzweigungskanäle sind in diesem Fall vorteilhaft zu einem Teil ihres Querschnittes im Nutgrund der Ringnut des unteren Werkzeugteiles und zu einem komplementären Teil im am Nutgrund anliegenden Bereich des Vorverteilringes ausgebildet, beispielsweise jeweils hälftig darin eingebracht, so daß entsprechende Verzweigungskanäle mit z. B. kreisförmigem Querschnitt jeweils hälftig im unteren Werkzeugteil und dem Vorverteilring ausgebildet werden und diese dann korrespondierend bei der Montage aneinandergefügt und geschlossen werden. Es ist auch möglich, die Verzweigungskanäle ausschließlich im unteren Werkzeugteil oder ausschließlich im Vorverteilring auszubilden und durch Aneinanderfügen der Teile die Verzweigungskanalquerschnitte dichtend zu schließen.

Bei der Ausführungsform des erfindungsgemäßen Werkzeugkopfes mit mehreren Werkzeugstufen, die übereinander angeordnet sind, kann der in ein Werkzeugteil eingesetzte Vorverteilring vorteilhaft auch als Paßring für die aufeinanderzusetzenden Werkzeugstufen dienen. Hierzu wird vorgeschlagen, daß der Vorverteilring eine größere Dicke aufweist als der Tiefe der Ringnut des mit dem Kanalsystem ausgebildeten unteren Werkzeuges entspricht, so daß der Vorverteilring mit einem Teil seines Querschnittes über die Ringnut in Richtung auf die sich anschließende Werkzeugstufe übersteht und der vorstehende Teil des Vorverteilringes in eine komplementär ausgebildete Ringnut an der Oberseite des oberen Werkzeugteiles einer sich anschließenden nächsten Werkzeugstufe einpaßbar ist. Auf diese Weise läßt sich die Bauhöhe des erfindungsgemäßen Werkzeugkopfes auch bei Ausführung mit mehreren übereinander angeordneten Werkzeugstufen effektiv verringern und gleichzeitig ist der Vorverteilring einer jeden Werkzeugstufe exakt innerhalb des Werkzeugkopfes angeordnet und gelagert.

Der Vorverteilring kann in der Ringnut des unteren Werkzeugteiles lösbar befestigt werden, beispielsweise mittels geeigneter Schrauben innerhalb dieser Ringnut angeschraubt werden, um insbesondere die den Verzweigungsbereich bildenden Verzweigungskanäle des unteren Werkzeugteiles in der exakten Positionierung ausbilden zu können.

Der Eintrittsbereich jeder Werkzeugstufe des erfindungsgemäßen Werkzeugkopfes ist vorteilhaft von zwei V-förmig zueinander angeordneten und vom Umfang des ersten Werkzeugteiles ausgehenden Eintrittskanälen gebildet, die zu jeweils einem ersten Verbindungskanal führen, der mit dem Verzweigungsbereich eine Kommunikation herstellt. Auf diese Weise wird bereits im Eintrittsbereich, der von den beiden Eintrittskanälen gebildet wird, eine Aufteilung der Kunststoffschmelze in zwei gleich große Teile vorgenommen, die über die ersten Verbindungskanäle an den Verzweigungsbereich übergeben und dort weiter aufgeteilt werden, bis sie letztlich gleichförmig aus dem Spiralbereich in den Ringspalt ausgegeben werden. Die Anordnung der Eintrittskanäle dergestalt, daß sie vom Umfang des ersten Werkzeugteiles ausgehen, ermöglicht darüber hinaus auch den umfangsseitigen Anschluß der Extrusionsanlagen für die Herstellung und Zuführung der Kunststoffschmelze ohne weitere bauliche Aufwendungen.

Ausgehend von den beiden von den Eintrittskanälen ausgehenden Verbindungskanälen sind im Verzweigungsbereich zwei Verzweigungssysteme symmetrisch zueinander ausgebildet und jedes Verzweigungssystem verzweigt sich wiederum in vier gleiche Verzweigungskanäle, und die acht Enden der vier gleichen Verzweigungskanäle sind gleichmäßig auf einen koaxialen Kreisring zur Mittelachse des Werkzeugkopfes verteilt angeordnet und kommunizieren jeweils mit einem zu dem Spiralbereich führenden Verbindungskanal. Der Verzweigungsbereich des erfindungsgemäßen Werkzeugkopfes umfaßt somit beispielsweise ein zu acht zweiten Verbindungskanälen führendes System von Verzweigungskanälen, so daß die über den Eintrittsbereich eintretende Kunststoffschmelze, die über die erste Gruppe von Verbindungskanälen in den Verzweigungsbereich übertritt, auf acht Teilströme in den Verzweigungskanälen aufgeteilt wird und sodann diese acht Teilströme über die zweiten Verbindungskanäle in den Spiralbereich eintreten.

Der Spiralbereich selber umfaßt vorteilhaft mehrere ineinanderliegend und konvergierend verlaufende Spiralkanäle, die radial von außen nach innen verlaufen, die mit jeweils einem vom Verzweigungsbereich kommenden Verbindungskanal an ihrem radial außen liegenden Ende kommunizieren. Im Falle von acht Verbindungskanälen, die von den acht Enden der Verzweigungskanäle kommen, sind daher vorteilhaft acht Spiralkanäle ausgebildet. Je nach Größe und Auslegung des erfindungsgemäßen Werkzeugkopfes sind selbstverständlich auch abweichende Ausführungsformen betreffend die Anzahl von Eintrittskanälen, Gruppe der ersten Verbindungskanäle, Verzweigungskanälen und Gruppe der zweiten Verbindungskanäle sowie Spiralkanälen möglich.

Um eine möglichst gleichmäßige Verteilung der Kunststoffschmelze bei ihrem Austritt in den Ringspaltraum zu gewährleisten, weisen die Spiralkanäle einen von außen nach innen abnehmenden Strömungsquerschnitt für die Kunststoffschmelze auf, so daß diese beim Strömen zum Ringspaltraum hin beschleunigt wird.

In besonders vorteilhafter Ausgestaltung des erfindungsgemäßen Werkzeugkopfes sind alle Strömungswege für die Kunststoffschmelze durch das Kanalsystem in einer Werkzeugstufe gleich lang ausgebildet, so daß eine gleichmäßige Einwirkung des Kanalsystems auf alle Teilströme der Kunststoffschmelze bewirkt wird und insbesondere eine homogene Temperatur und Verteilung der Kunststoffschmelze erzielt wird.

Eine besonders kompakte Bauform des Werkzeugkopfes wird erfindungsgemäß dadurch erreicht, daß die Ebene des Eintrittsbereiches, des Verteilbereiches und des Spiralbereiches in einer Werkzeugstufe parallel zueinander und vorteilhaft diese Ebenen senkrecht zur Mittelachse des Werkzeugkopfes verlaufend angeordnet sind. Im Rahmen der Erfindung ist es auch möglich, andere Ausrichtungen der Ebenen in bezug auf die Mittelachse vorzusehen.

Eine weitere vorteilhafte Bauweise des erfindungsgemäßen Werkzeugkopfes ergibt sich gemäß einem Vorschlag der Erfindung dadurch, daß die den Eintrittsbereich des Kanalsystems mit dem Verzweigungsbereich des Kanalsystems verbindenden Verbindungskanäle der ersten Gruppe und die den Verzweigungsbereich des Kanalsystems mit dem Spiralbereich des Kanalsystems verbindenden Verbindungskanäle der zweiten Gruppe senkrecht zu den Ebenen des Kanalsystems und koaxial zur Mittelachse des Werkzeugkopfes verlaufend ausgebildet sind.

Darüber hinaus kann vorgesehen sein, daß alle Werkzeugstufen des erfindungsgemäßen Werkzeugkopfes separat temperierbar sind, so daß die durch diese Werkzeugstufen geführten Kunststoffschmelzen im jeweils optimalen Temperaturbereich in den Ringspaltraum abgegeben werden können und schädliche thermische Einflüsse weitgehend von der Kunststoffschmelze ferngehalten werden.

Die Erfindung wird nachfolgend in weiteren Einzelheiten an der lediglich ein Ausführungsbeispiel darstellenden Zeichnung erläutert. Es zeigen:
- Figur 1: eine schematische Darstellung der Vorrichtung zum Extrudieren und Herstellen einer Blasfolie auszugsweise,
- Figur 2: einen Längsschnitt durch einen modular aufgebauten Werkzeugkopf gemäß Figur 1 in schematisierter Darstellung,
- Figur 3: das Detail W gemäß Figur 2 in vergrößerter Darstellung,
- Figur 4: die Aufsicht auf das untere Werkzeugteil einer Werkzeugstufe in der Ansicht gemäß Pfeil D1 von Figur 3,
- Figur 5: die Aufsicht auf das untere Werkzeugteil einer Werkzeugstufe gemäß Ansicht D2 von Figur 3,
- Figur 6: die Aufsicht auf den Schnitt durch das untere Werkzeugteil einer Werkzeugstufe in der Ebene EE gemäß Pfeil D3 von Figur 3,
- Figur 7: eine schematische Darstellung der Anordnung und Ausbildung des Kanalsystems einer Werkzeugstufe,
- Figur 8: in schematischer Darstellung den Schnitt CC von Figur 4 durch das untere Werkzeugteil einer Werkzeugstufe,
- Figur 9: die Draufsicht auf den Vorverteilring gemäß Figur 3 in Pfeilrichtung D4,
- Figur 10: den Querschnitt FF durch den Vorverteilring gemäß Figur 9.

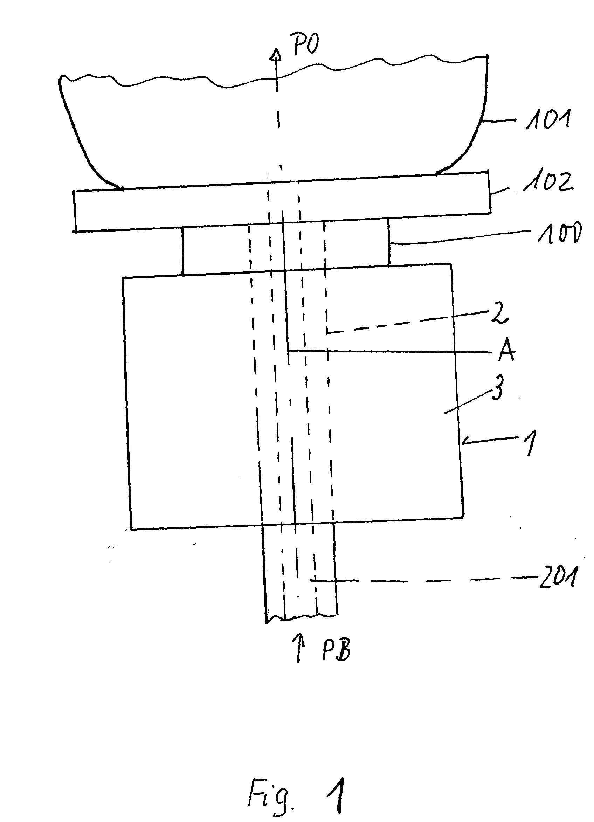

In der Figur 1 ist schematisch auszugsweise eine Vorrichtung zum Extrudieren und Aufblasen einer mehrschichtigen Blasfolie 101 dargestellt. Die Extrusionsvorrichtung umfaßt den modular aufgebauten Werkzeugkopf 1 mit Düse 100 für den Austritt der Kunststoffschmelze als rohrförmigen Strang, der nachfolgend zu der Blasfolie 101 in Richtung PO aufgeblasen wird. Der Werkzeugkopf 1 umfaßt ein Innenwerkzeug 2 und ein Außenwerkzeug 3, die koaxial zur Mittelachse A des Werkzeugkopfes 1 angeordnet sind. Vor der Düse 100 ist ein den aus der Düse austretenden Strang umgebender Kühlring 102 zum Anblasen der Blasfolie 101 mit Kühlluft angeordnet. Das Innenwerkzeug 2 ist nach Art einer Dorns mit beispielsweise zylindrischem Durchmesser ausgebildet und in dessen Innern ist ein Durchgang 201 ausgebildet, der in an sich bekannter Weise für die Zu- und Abführung von Blasluft, siehe Pfeil PB, zu der aufzublasenden Blasfolie genutzt werden kann.

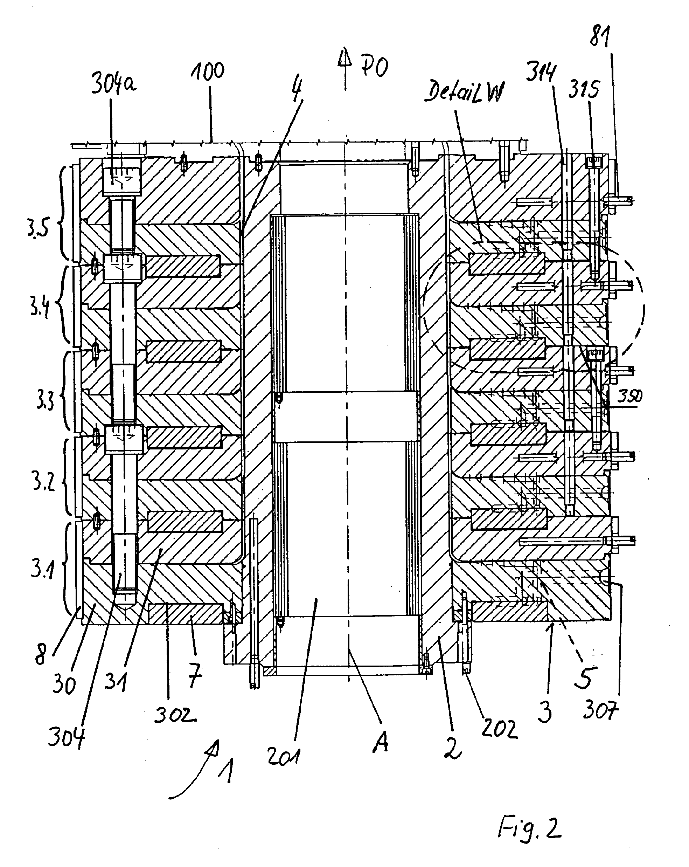

Die Erfindung befaßt sich mit dem Aufbau und der Ausgestaltung des Werkzeugkopfes 1, siehe Figur 2, bei dem das Innenwerkzeug 2 in Gestalt des Dornes von dem Außenwerkzeug 3 unter Belassung eines Ringspaltraumes 4 umgeben ist, wobei der Ringspaltraum 4 koaxial zur Mittelachse A des Werkzeugkopfes ausgerichtet ist.

Das Außenwerkzeug 3 ist aus einer der Anzahl von Kunststoffschmelzen, die schichtweise in den Ringspaltraum 4 eingebracht werden, entsprechenden Anzahl von Werkzeugstufen aufgebaut. In dem Ausführungsbeispiel sind fünf Werkzeugstufen 3.1, 3.2, 3.3, 3.4, 3.5 vorgesehen, die einen prinzipiell gleichen Aufbau aufweisen und nach Art eines Stapels übereinander angeordnet sind. Jede Werkzeugstufe ist im wesentlichen senkrecht zur Mittelachse A des Werkzeugkopfes unterteilt und umfaßt zwei Werkzeugteile 30, 31, die jeweils ringförmig und plattenförmig ausgebildet sind und ebenfalls übereinander angeordnet werden. Das der Düse 100 zugewandte Werkzeugteil 31 wird als oberes Werkzeugteil und das der Düse 100 abgewandte Werkzeugteil 30 wird als unteres Werkzeugteil jeder Werkzeugstufe 3.1 bis 3.5 bezeichnet. Die einzelnen Werkzeugstufen 3.1 bis 3.5 sind über Schrauben 304 bzw. 315 miteinander verbunden, insbesondere ist jede Werkzeugstufe mit der vorangehenden Werkzeugstufe über jeweilige Schrauben 304 verbunden. Die Werkzeugteile 30, 31 einer Werkzeugstufe 3.1 bis 3.5 sind ebenfalls untereinander mittels Schrauben 314 verbunden. Lediglich die außen liegenden Werkzeugteile jeder äußeren Werkzeugstufe eines Werkzeugkopfes 1 sind äußerlich dieser Endposition angepaßt, d. h. das untere Werkzeugteil 30 der ersten Werkzeugstufe 3.1 und das obere Werkzeugteil 31 der Werkzeugstufe 3.5, wobei diese sich insbesondere durch eine größere Dicke in bezug auf die Dicke der Werkzeugteile der innenliegenden Werkzeugstufen 3.2, 3.3, 3.4 hervorheben.

Bei einer ungeraden Anzahl von Werkzeugstufen verbleibt jeweils eine außen liegende Werkzeugstufe, die nur mittels einer halblangen Schraube 304a zusammenschraubbar ist, siehe Figur 2. Aus diesem Grund werden die fünf Werkzeugstufen mittels der großen Schrauben 304 abwechselnd am Umfang in der Weise befestigt, daß jeweils eine halblange Schraube 304a entweder in der düsennahen letzten Werkzeugstufe 3.5 oder der düsenfernsten Werkzeugstufe 3.1, nicht dargestellt in Figur 2, angeordnet ist.

Jede Werkzeugstufe 3.1 bis 3.5 weist außenseitig am Umfang eine Eintrittsöffnung 307 auf, die dem Anschluß einer nicht näher dargestellten Zuführleitung für die thermoplastische Kunststoffschmelze K dient. Jede Werkzeugstufe 3.1 bis 3.5 ist mit einem Kanalsystem 5 zum Verteilen der über die Eintrittsöffnung 307 einströmenden Kunststoffschmelze zum Verteilen und Fördern derselben in den Ringspaltraum 4 ausgebildet. Die Kunststoffschmelzen werden am Ende eines jeden Kanalsystems 5 jeder Werkzeugstufe mit Abstand nacheinander schichtweise in den Ringspaltraum 4 gefördert und aufeinandergelegt und treten dann in Pfeilrichtung PO über die nicht dargestellte Düse 100 als entsprechend mehrschichtiger, hier fünfschichtiger rohrförmiger Strang aus, der nachfolgend zu der Blasfolie aufgeblasen wird. Die einzelnen Werkzeugstufen können mit gleichen und/oder untereinander verschiedenartigen Kunststoffschmelzen beschickt werden.

Jede Werkzeugstufe 3.1 bis 3.5 ist mit eigenen Temperierelementen, hier in Form außenseitig aufgebrachter Heizbänder 8 ausgestattet, die eine individuell unterschiedliche Temperierung der einzelnen Werkzeugstufen je nach zugeführtem Rohstoff und Produktionsanforderungen ermöglichen. Zur Überwachung und Regelung sind Buchsen 81 für Temperaturfühler jeweils im oberen Werkzeugteil jeder Werkzeugstufe vorgesehen, in welche entsprechende Temperaturfühler eingesteckt werden können.

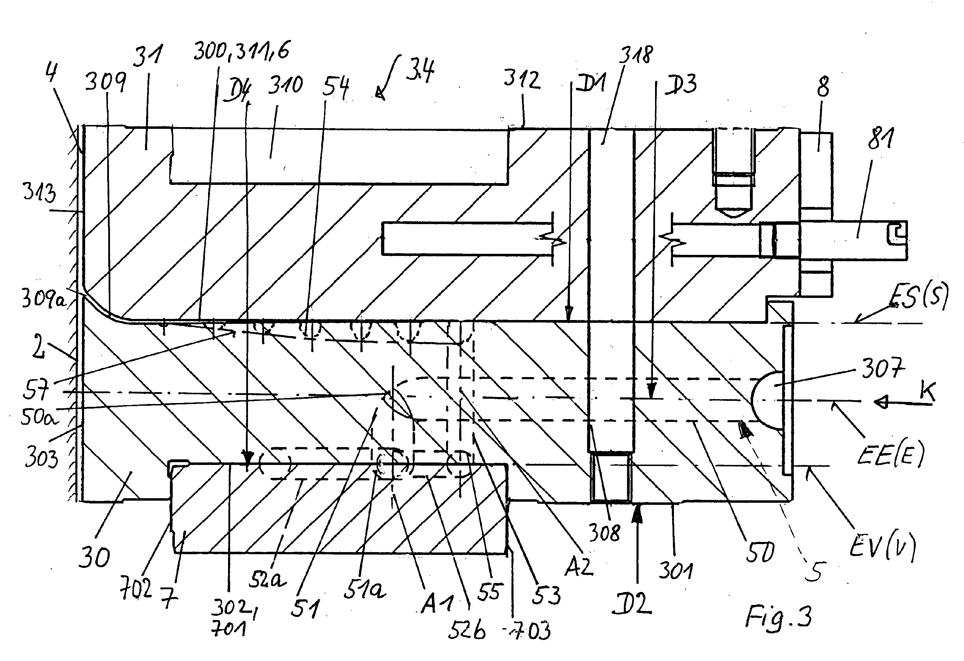

In der Figur 2 ist das Kanalsystem für die Schmelzeverteilung in jeder Werkzeugstufe nur schematisch in der rechtsseitigen Hälfte der Abbildung dargestellt. Der weitere Aufbau der einzelnen Werkzeugstufen 3.1 bis 3.5 und des Kanalsystems, der im wesentlichen untereinander gleich ist, wird nachfolgend anhand der vergrößerten Darstellung der hier repräsentativ gewählten inneren Werkzeugstufe 3.4 gemäß Detail D der Figur 2 in der Figur 3 näher erläutert. Die Werkzeugstufe 3.4 gemäß Figur 3 umfaßt ein erstes unteres Werkzeugteil 30 und ein zweites oberes Werkzeugteil 31, die ringförmig scheibenförmig ausgebildet sind und stapelartig aufeinandergelegt angeordnet sind, wobei zwischen den beiden Werkzeugteilen 30, 31 eine Trennfuge 6 ausgebildet ist. Die Werkzeugteile 30, 31 sind koaxial um die Mittelachse A des Werkzeugkopfes 1 angeordnet. Die Werkzeugteile 30 bzw. 31 weisen jeweils eine Innenbohrung 303 bzw. 313 auf, die die äußere Begrenzung zum Ringspaltraum 4 bildet.

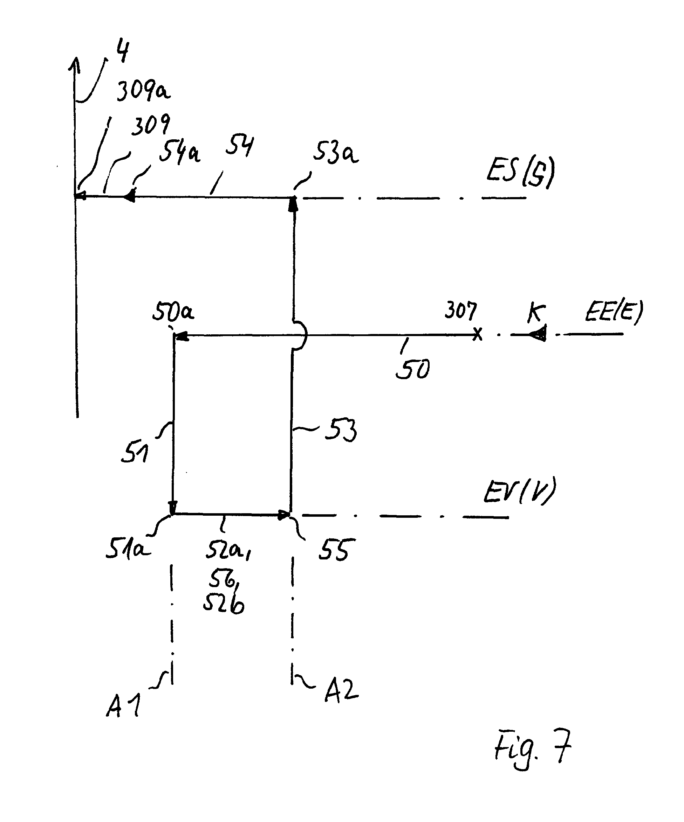

Das untere Werkzeugteil 30 weist am Umfang eine Eintrittsöffnung 307 auf, über welche die thermoplastische Kunststoffschmelze K zugeführt wird. Die thermoplastische Schmelze gelangt in das Kanalsystem 5 und wird in diesem gleichförmig verteilt und weiter gefördert, bis es in die Trennfuge 6 zwischen oberem und unterem Werkzeugteil gelangt, von wo es über eine Verteilfläche 309 mit ringförmiger Austrittsöffnung 309a in den Ringspaltraum 4 gelangt und von dort weiter zur Düse gefördert wird. Das Kanalsystem zum Verteilen der Kunststoffschmelze in einer Werkzeugstufe, wie es in der Figur 3 ausgeführt ist, ist auch in der Figur 7 schematisch dargestellt. Das erfindungsgemäße Kanalsystem umfaßt drei Bereiche, nämlich einen Eintrittsbereich E, der sich von der Eintrittsöffnung 307 in der Ebene EE innerhalb des unteren Werkzeugteiles 30 im wesentlichen senkrecht zur Mittelachse A des Werkzeugkopfes erstreckt, einen Verzweigungsbereich V, der sich an der unteren Oberfläche 301 des unteren Werkzeugteiles 30, d. h. an der der Düse 100 abgewandten Seite des Werkzeugteiles 30 in einer Ebene EV erstreckt, die der nächsten anliegenden Werkzeugstufe benachbart ist und einen Spiralbereich S, der sich in einer Ebene ES, die in der Ebene der Trennfuge 6 liegt, erstreckt. Der Eintrittsbereich E ist mit dem Verzweigungsbereich V über eine Gruppe erster Verbindungskanäle 51 und der Verzweigungsbereich V ist mit dem Spiralbereich S über eine zweite Gruppe von Verbindungskanälen 53 verbunden. Die Gruppen der Verbindungskanäle 51, 53 verlaufen im wesentlichen senkrecht zu den Ebenen EE, EV, ES des Kanalsystems zur Schmelzeverteilung im Eintrittsbereich E, Verzweigungsbereich V und Spiralbereich S, siehe die Verbindungskanalachsen A1, A2. Die Verbindungskanäle 51, 53 sind bevorzugt koaxial zur Mittelachse A des Werkzeugkopfes angeordnet. In Strömungsrichtung der Kunststoffschmelze K folgen der Eintrittsbereich, der Verzweigungsbereich und der Spiralbereich einander. Das Kanalsystem 5 ist nur an einem der beiden Werkzeugteile, nämlich dem Werkzeugteil 30, einer Werkzeugstufe ausgebildet.

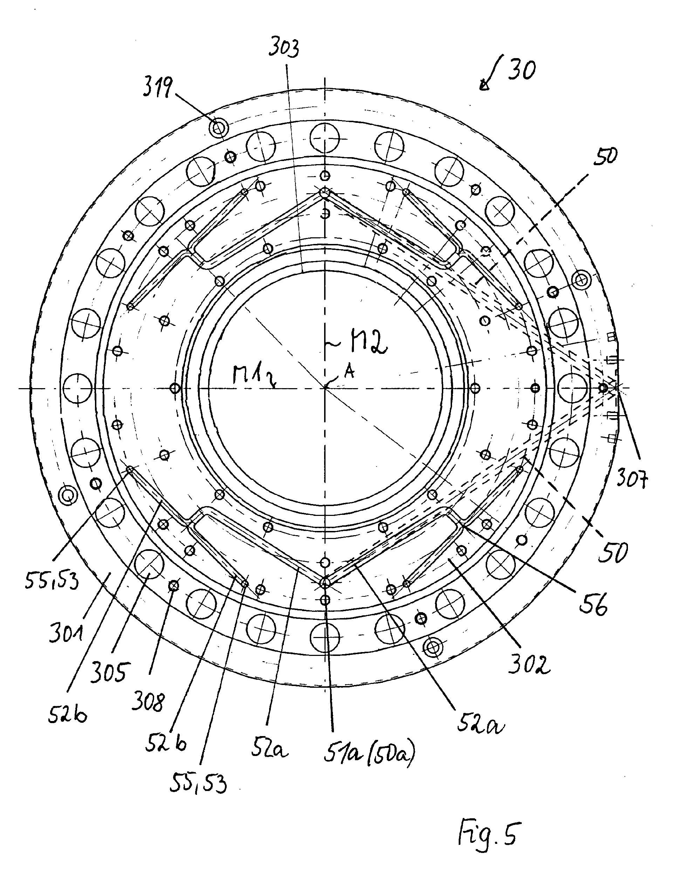

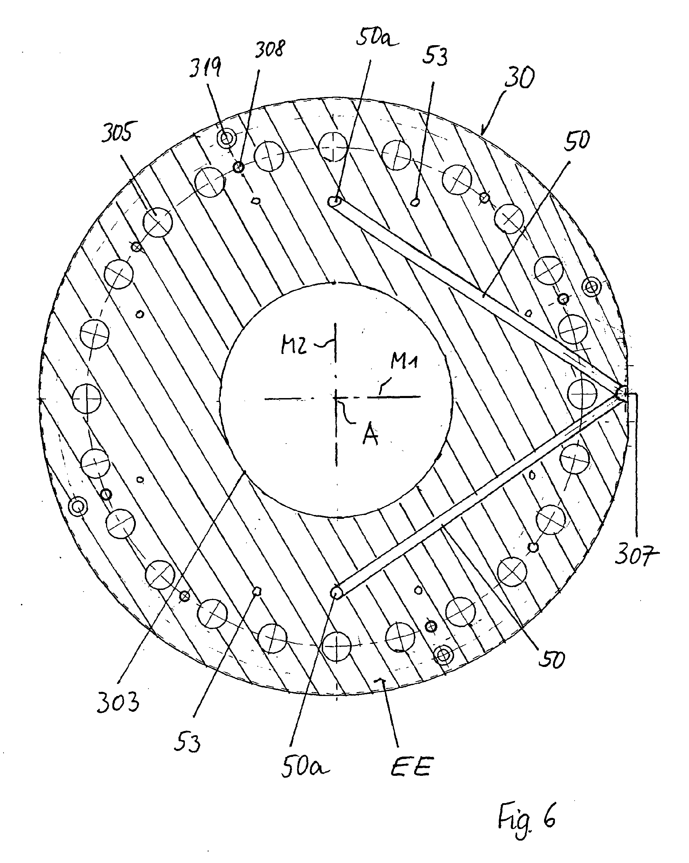

Die Ebene EE des Eintrittsbereiches E erstreckt sich zwischen den beiden anderen Ebenen EV und ES des Verzweigungsbereiches V und des Spiralbereiches S, wobei alle drei Ebenen EE, EV und ES sich im wesentlichen parallel zueinander erstrecken, und im Ausführungsbeispiel verlaufen die drei Ebenen auch im wesentlichen senkrecht zur Mittelachse A des Werkzeugkopfes 1. Diese einzelnen Bereiche werden nachfolgend analog zum Verlauf der Kunststoffschmelze K ausgehend von der Eintrittsöffnung 307 am Umfang bis hin zum Austritt in den Ringspaltraum 4 in Verbindung mit den Figuren 3 und 7 erläutert. Die Kunststoffschmelze K tritt zunächst an der Eintrittsöffnung 307 in den Eintrittsbereich E des Kanalsystems ein, wobei der Eintrittsbereich von zwei V-förmig zueinander angeordneten und von der Eintrittsöffnung 307 am Umfang des unteren Werkzeugteiles 30 abgehenden Eintrittskanälen 50 gebildet wird, siehe Figur 6, die auf einer Eintrittsebene EE innerhalb des Werkzeugteiles 30 ausgebildet sind. Die beiden Eintrittskanäle 50, die den in der Ebene EE liegenden Eintrittsbereich E des Kanalsystems 5 bilden, verlaufen spiegelsymmetrisch zu der Mittelachse M1 und enden auf der hierzu rechtwinklig verlaufenden zweiten Mittelachse M2 mit den Enden 50a. Wie auch aus Figur 3 ersichtlich, mündet jedes Ende 50a der beiden Eintrittskanäle 50 in einen Verbindungskanal 51, welche die erste Gruppe der Verbindungskanäle bilden. Die Verbindungskanäle 51 führen von der Ebene EE des Eintrittsbereiches E zu der Unterseite 301 des Werkzeugteiles 30 und damit zum Verzweigungsbereich V, siehe auch die Ansicht der Unterseite 301 des Werkzeugteiles 30 gemäß Figur 5. Die Verbindungskanäle 51 enden im Bereich 51a in den an dieser Stelle beginnenden Verzweigungskanälen 52a des Verzweigungsbereiches V.

In die Unterseite 301 des mit dem Kanalsystem 5 ausgebildeten unteren Werkzeugteiles 30 ist eine umlaufende Ringnut 302 eingearbeitet, siehe Figur 3, in welche ein Vorverteilring 7 eingesetzt ist, der mit seinen beiden Seitenflächen 702 und 703 passend und abdichtend in der Ringnut 302 aufgenommen wird. Der Vorverteilring 7 weist jedoch eine größere Höhe als der Tiefe der Ringnut 302 entspricht auf und steht daher um einen entsprechenden Teil seines Querschnittes über die Oberfläche 301 des Werkzeugteiles 30 vor. Die Oberfläche 301 des Werkzeugteiles 30 bildet zugleich die Teilungsfuge und anliegende Fläche für die sich anschließende nächste Werkzeugstufe 3.3, siehe Figur 2, und deren oberes Werkzeugteil. Durch die Ausbildung der Ringnut 302 ist die Teilungsfuge 301 in das Werkzeugteil 30 hineingezogen und erfindungsgemäß ist der Verzweigungsbereich V mit dem Kanalsystem 52a, 52b in der Oberfläche des Nutgrundes der Ringnut 302 ausgebildet. Im Nutgrund 302 an der Unterseite 301 des Werkzeugteiles 30 ist ausgehend von jedem Ende 51a eines Verbindungskanals 51 ein Verzweigungssystem 52a, 52b ausgebildet und diese beiden Verzweigungssysteme sind symmetrisch zur Mittelachse M1 der Werkzeugstufe angeordnet, siehe Figur 5. Ausgehend von den Enden 51a der Verbindungskanäle 51 ist jedes Verzweigungssystem zu der zur Mittelachse M1 senkrechten Mittelachse M2 symmetrisch ausgebildet mit jeweils zwei V-förmig abgehenden Verzweigungskanälen 52a, die radial nach innen verlaufen, welche an ihren Endpunkten 56 abgewinkelt sind und sich erneut verzweigen in jeweils zwei Kanalabschnitte 52b, die sich radial nach außen erstrecken. Die Kanalabschnitte 52b enden in acht Endpunkten 55, welche auf einem Kreisring um die Mittelachse A des Werkzeugkopfes gleichmäßig voneinander beabstandet angeordnet sind. Der Strömungsweg für die Kunststoffschmelze ist somit vom Eintrittsbereich über die Kanäle 50 ausgehend bis hin zu den Endpunkten 55 des Verzweigungsbereiches jeweils symmetrisch aufgeteilt worden und alle Strömungswege sind von der Eintrittsöffnung 307 bis zum Punkt 55 gleich lang.

Es ist nun möglich, den erforderlichen Strömungsquerschnitt des Verzweigungsbereiches V ausschließlich in die Oberfläche 301 des Werkzeugteiles 30 einzuarbeiten. Es ist aber auch möglich, diesen erforderlichen Strömungsquerschnitt der Verzweigungskanäle im Verzweigungsbereich V hälftig in die Oberfläche des Werkzeugteiles 30 und zur anderen Hälfte in die Oberfläche des anliegenden Vorverteilringes 7 einzuarbeiten. Durch Ausbildung der Ringnut 302 wird der Verzweigungsbereich V aus der unmittelbaren Teilungsfuge zwischen aneinandergrenzenden Werkzeugstufen herausgelegt und eine einwandfreie Abdichtung des Verzweigungsbereiches V ist möglich.

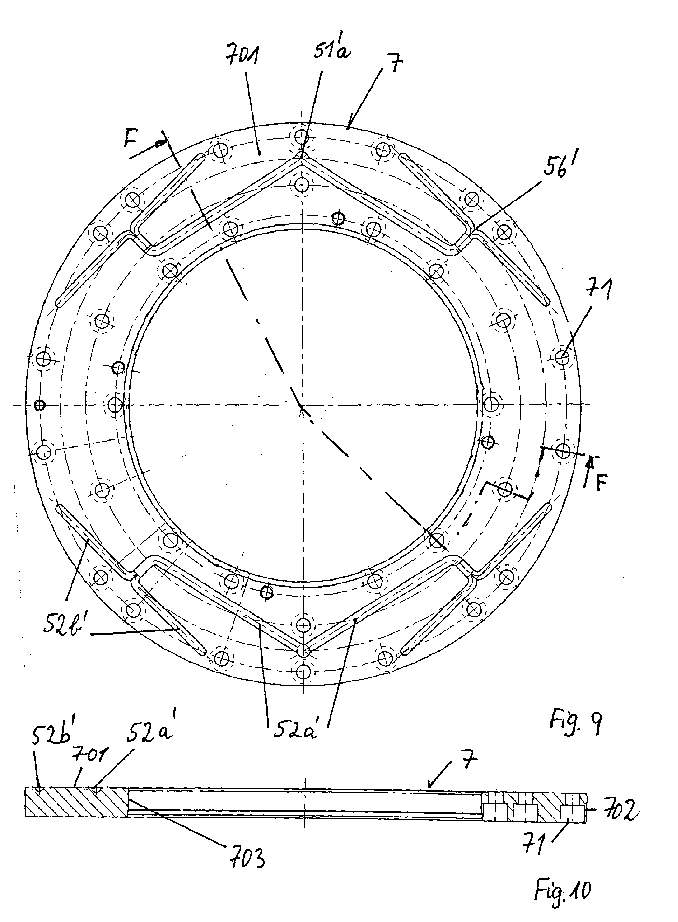

In identischer Anordnung zu dem in die Unterseite 301 im Bereich der Ringnut 302 des Werkzeugteiles 30 eingearbeiteten Kanalsystem 52a, 52b ist auf der dem Nutgrund der Ringnut 302 zugewandten Oberfläche 701 des Vorverteilringes 7 ein spiegelbildliches Kanalsystem 52a', 52b', 56' ausgebildet, beispielsweise in Form nutförmiger Ausfräsungen, siehe Figuren 9 und 10.

Es ist beispielsweise aus der Figur 3 in Verbindung mit Figur 9 ersichtlich, daß der Verlauf und Strömungsquerschnitt aller Verzweigungskanäle des Verzweigungsbereiches V jeweils zu ihrer einen Strömungsquerschnittshälfte 52a, 52b, 56 an dem ersten Werkzeugteil 30 und zur anderen Hälfte 52a', 52b', 56' an dem Vorverteilring 7 ausgebildet sind. Die Ausbildung der Ringnut 302 am Werkzeugteil 30 mit darin eingesetztem Vorverteilring 7 ermöglicht erfindungsgemäß, den mittleren der drei Verteilungsbereiche aus Eintrittsbereich, Verzweigungsbereich und Spiralbereich, nämlich den Verzweigungsbereich aus dem sich an die Unterseite 301 des Werkzeugteiles 30 einer ersten Werkzeugstufe, z. B. 3.4 angrenzenden Verbindungsspalt 350, siehe Figur 2, zur sich anschließenden Werkzeugstufe 3.3 bzw. dessen angrenzenden zweiten Werkzeugteil 31 herauszunehmen und in den Bereich der Ringnut 302 zu verlagern. Auf diese Weise ist es auch möglich, den Verzweigungsbereich einwandfrei im Bereich der Ringnut/Vorverteilring abzudichten.

Der Vorverteilring 7 kann mittels durch Bohrungen 71, siehe auch Figur 10, geführter nicht dargestellter Schrauben so innerhalb der Ringnut 302 des ersten Werkzeugteiles 30 angeordnet und befestigt werden, daß die die Verzweigungskanäle 52 bildenden Ausfräsungen 52a, 52b; 52a', 52b' korrespondierend aufeinander zum Liegen kommen und einen Verzweigungsbereich mit Kanälen mit Kreisquerschnitt bilden.

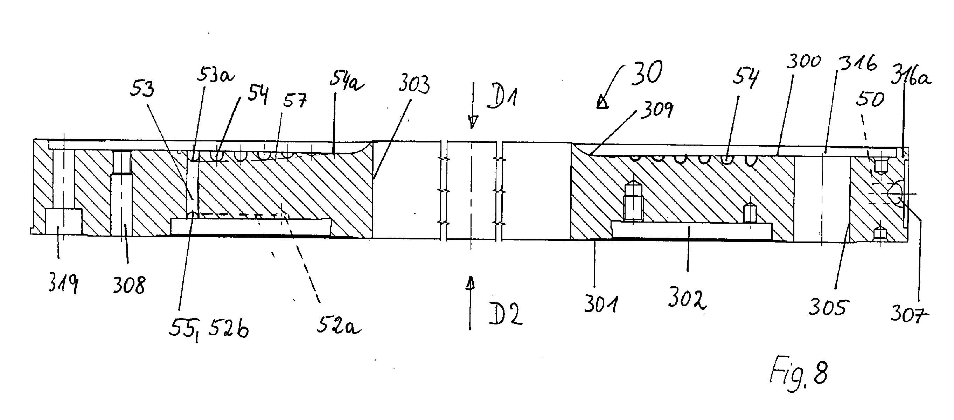

An den acht Enden 55 der den Verzweigungsbereich bildenden Kanalabschnitte 52b, die an der Unterseite des ersten Werkzeugteiles 30 im Bereich des Nutgrundes der Ringnut 302 ausgebildet sind, schließen sich jeweils ein Verbindungskanal 53 an, welche die zweite Gruppe von Verbindungskanälen bilden, siehe Figur 8 und Figur 3.

Diese zweiten Verbindungskanäle 53 führen ausgehend von der Ebene EV des Verzweigungsbereiches im wesentlichen achsparallel zur Längsachse A des Werkzeugkopfes bzw. der Werkzeugstufen durch das untere Werkzeugteil 30 hindurch bis zur Oberseite 300 des unteren Werkzeugteiles 30, d. h. bis zur Trennfuge 6 zwischen dem unteren und oberen Werkzeugteil einer Werkzeugstufe. Hierbei durchdringen die Verbindungskanäle 53 die Ebene EE des Eintrittsbereiches, jedoch in Bereichen außerhalb der ausgebildeten Eintrittskanäle 50.

Die Anordnung der zweiten Verbindungskanäle 53 ist so gewählt, daß sie alle auf einer gemeinsamen, sich koaxial zum Ringspalt 4 erstreckenden Kreislinie liegen und jeweils benachbarte Verbindungskanäle 53 auf der Kreislinie gleiche Abstände voneinander aufweisen. Diese Geometrie ist bereits durch die Anordnung der Verzweigungskanäle und der Enden 55 der Kanalabschnitte 52b vorgegeben. Auf der Oberseite 300 des unteren Werkzeugteiles 30, welches die in Blasrichtung P0 der Unterseite 301 voraneilende Oberfläche des Werkzeugteiles 30 ist, ist der dritte Verteilbereich, nämlich der Spiralbereich S in Form von nutförmigen spiralig angeordneten Ausfräsungen ausgebildet.

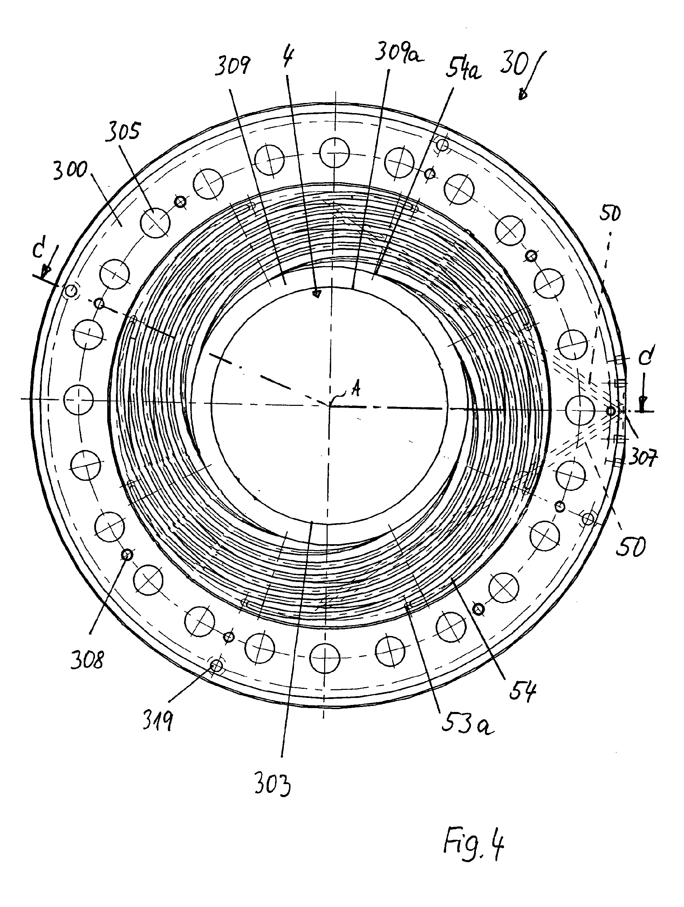

Auf der in der Figur 4 dargestellten Oberseite 300 des unteren Werkzeugteiles 30 gehen nunmehr von jedem Ende 53a der hier endenden insgesamt acht Verbindungskanäle 53 Spiralkanäle 54 ab, die nebeneinanderliegend und konvergierend in Richtung auf die Innenbohrung 303 und Ringspaltraum 4 geführt sind. Die Spiralkanäle liegen in einer Ebene ES und bilden den Spiralbereich S des Kanalsystems. Zwischen den Enden 54a der Spiralkanäle, siehe Figur 3 und Figur 4, und dem Ringspaltraum 4 ist eine ringförmige Vorverteilfläche 309 gebildet, die mit der Trennfuge 6 zwischen oberem und unterem Werkzeugteil 31, 30 einen Fließspalt bildet. Die aus den Verbindungskanälen 53 an den Enden 53a austretenden Teilströme der zugeführten Kunststoffschmelze gelangen nunmehr auf spiralförmigen Bahnen innerhalb der einzelnen Spiralkanäle 54 in Richtung auf den Ringspalt 4 auf die auf der Oberseite 300 ausgebildete ringförmige Verteilfläche 309, aus welcher sie in den umlaufenden Ringspaltraum 4 des Werkzeugkopfes 1 über den Spalt 309a eintreten.

Durch die spiralförmige Anordnung der einzelnen Spiralkanäle 54 wird hierbei eine gleichmäßige Verteilung der einzelnen Teilströme hin zu einem homogenen Gesamtstrom, welcher radial über die Verteilfläche 309 in den Ringspaltraum 4 eintritt, erreicht.

Die Ebene ES des Spiralbereiches grenzt an die Trennfuge 6, die zwischen dem unteren Werkzeugteil 30 und dem oberen Werkzeugteil 31 einer jeden Werkzeugstufe, beispielsweise der Werkzeugstufe 3.4, ausgebildet ist. Der Spiralbereich wird auf der Oberseite des Werkzeugteiles 30 abgedeckt mittels des zweiten Werkzeugteiles 31 der Werkzeugstufe. Hierbei wird die ringförmige Verteilfläche 309, die sich an das Ende der Spiralkanäle zum Ringspaltraum 4 hin anschließt, zwischen den Werkzeugteilen 30, 31 als Austrittsöffnung 309a ausgebildet.

Die über die Eintrittsöffnung 307 in die Werkzeugstufe eintretende Kunststoffschmelze erfährt somit eine mehrfache Aufteilung innerhalb des Kanalsystems 5, indem sie zunächst aus der innerhalb des unteren Werkzeugteiles 30 angeordneten Eintrittsebene EE und deren Eintrittskanälen 50 über an deren Enden 50a ausgebildete erste Verbindungskanäle 51 in den unterhalb der Ebene EE auf einer Ebene EV liegenden Verzweigungsbereich V eintritt. Innerhalb dieses Verzweigungsbereiches V wird die Kunststoffschmelze K in den Verzweigungskanälen 52a, 52b, 56 auf weitere, hier insgesamt acht Teilströme aufgeteilt, die sodann über die zweiten Verbindungskanäle 53 durch das untere Werkzeugteil 30 hindurch in den Spiralbereich S gelangen, dessen Ebene ES oberhalb der Ebene EE des Eintrittsbereiches E angeordnet ist. Über die den Spiralbereich S bildenden einzelnen Spiralkanäle 54 wird die Kunststoffschmelze letztlich zu der ringförmigen Austrittsöffnung 309a geleitet, von der sie als gleichmäßiger rohrförmiger Strom in den Ringspaltraum 4 austritt.

Zur Homogenisierung des Austrittes der Schmelze aus der Austrittsöffnung 309a trägt auch bei, daß die einzelnen Spiralkanäle zu ihrem Ende 54a, d. h. zur Verteilfläche 309 hin, einen abnehmenden Strömungsquerschnitt aufweisen, indem die lichte Weite, Tiefe der Nuten, die in die Oberfläche des Werkzeugteiles als Spiralkanäle eingearbeitet sind, der einzelnen Spiralkanäle 54 kontinuierlich verringert wird, siehe den Verlauf der Tiefenlinie 57 in Figuren 2 und 8.

Wesentlich für eine gute Homogenisierung ist es nunmehr, daß sämtliche innerhalb des vorangehend erläuterten Kanalsystems 5 von der Kunststoffschmelze durchlaufenen Wege alle die gleiche Länge aufweisen, so daß eine gleichbleibende Einwirkung auf die Kunststoffschmelze hinsichtlich Druck und Wärme gegeben ist.

Aufgrund der Tatsache, daß das gesamte Kanalsystem 5 jeweils symmetrisch in einen Eintrittsbereich, einen Verzweigungsbereich und einen Spiralbereich unterteilt ist, die auf drei verschiedenen Ebenen EE, EV, ES in einem Werkzeugteil 30 einer Werkzeugstufe angeordnet sind, wird nicht nur eine besonders gleichmäßige Verteilung der Kunststoffschmelze erzielt, sondern diese Art der Verteilung benötigt auch nur eine überraschend niedrige Bauhöhe der Werkzeugstufen und damit des Werkzeugkopfes, was sich in einer vorteilhaft geringen Gesamthöhe des vorangehend erläuterten Werkzeugkopfes niederschlägt. Von den beiden Werkzeugteilen 30, 31 einer Werkzeugstufe ist nur ein Werkzeugteil, nämlich das untere Werkzeugteil 30, mit Kanälen für die Schmelzezuführung ausgebildet.

Es ist ferner den Figuren entnehmbar, daß alle Ebenen EE, EV, ES des Eintritts-, Verzweigungs- bzw. Spiralbereiches parallel zueinander und senkrecht zur Längsachse A des Werkzeugkopfes 1 verlaufen. Die ersten und zweiten Verbindungskanäle 51, 53 verlaufen ihrerseits parallel zueinander und senkrecht zu den Ebenen EE, EV und ES.

Diese Geometrie ist jedoch nur beispielhaft dargestellt, es sind auch hiervon abweichende Ausrichtungen der Ebenen EE, EV und ES und/oder der Verbindungskanäle 51, 53 denkbar.

Ein besonders wirtschaftlicher Aufbau des Werkzeugkopfes wird dadurch gewährleistet, daß eine hohe Zahl von Gleichteilen verwendet wird, wie sich ohne weiteres aus der Figur 1 ergibt, bei der ersichtlich ist, daß die Werkzeugstufen 3.2, 3.3 und 3.4 über nahezu identische Werkzeugteile verfügen und die unterste und oberste Werkzeugstufe 3.1 bzw. 3.5 demgegenüber nur geringfügig geänderte Abmessungen aufweisen. Im übrigen verändern sich die Innenbohrungsdurchmesser der Werkzeugstufen und werden in Richtung auf die Düse in jeder Werkzeugstufe größer entsprechend der aufzutragenden Schichtdicke jeder Stufe.

Ferner ist es zur Erzielung einer besonders kompakten und raumsparenden Bauweise vorgesehen, daß im Falle mehrerer Werkzeugstufen, wie sie in der Figur 1 dargestellt sind, der jeweils zu einem unteren Werkzeugteil 30 einer Werkzeugstufe gehörende Vorverteilring 7, der wie bereits erwähnt über die Unterseite 301 des ersten Werkzeugteiles 30 hervorsteht, mit seinem überstehenden Querschnittsbereich in einer komplementär ausgebildeten Ringnut 310 an der Oberseite 312 des oberen Werkzeugteiles 31 der vorangehenden Werkzeugstufe aufgenommen wird, so daß eine besonders stabile Lagerung und platzsparende Bauweise erreicht wird, siehe Figuren 2 und 3.

In den Figuren 3, 4, 5, 6, 8 und 9 sind des weiteren die Bohrungen 308, 318, 319, 305 dargestellt, die der Aufnahme der Schrauben 314, 315, 304, 304a zum Verschrauben der Werkzeugteile bzw. Werkzeugstufen untereinander dienen.

Das als Innendorn 2 ausgebildete Innenwerkzeug ist auch mittels Schrauben 202 an dem außen liegenden Werkzeugteil der ersten Werkzeugstufe 3.1 befestigt.

Da darüber hinaus aufgrund des vorangehend erläuterten Schmelzeverteilkanalsystems einer jeden Werkzeugstufe 3.1 bis 3.5 eine effektive und auf kurzen Wegen erfolgende Schmelzeverteilung erfolgt, sind die einzelnen zugeführten thermoplastischen Kunststoffschmelzen weitgehend unbeeinflußt von den unterschiedlichen Temperaturen anderer Werkzeugstufen, was sich in einer hohen Produktionsgenauigkeit niederschlägt.

## Patentansprüche

1. Werkzeugkopf mit einer Düse (100) zur Extrusion eines rohrförmigen Stranges aus mindestens einer thermoplastischen Kunststoffschmelze (K) für die Herstellung von Blasfolien (101), wobei der Werkzeugkopf (1) ein um eine Mittelachse (A) angeordnetes Innenwerkzeug (2) und ein Außenwerkzeug (3) enthält und zwischen Innenwerkzeug (2) und Außenwerkzeug (3) ein Ringspaltraum (4) ausgebildet ist, und der Ringspaltraum (4) sich konzentrisch zur Mittelachse (A) erstreckt und in die Düse (100) mündet und das Außenwerkzeug (3) mindestens eine Werkzeugstufe (3.1, 3.2, 3.3, 3.4, 3.5) mit zwei aufeinander angeordneten ringförmig und plattenförmig ausgebildeten Werkzeugteilen (30, 31) umfaßt und zwischen den zwei Werkzeugteilen (30, 31) einer jeden Werkzeugstufe (3.1, 3.2...) eine in den Ringspaltraum (4) einmündende Trennfuge (6) ausgebildet ist und jede Werkzeugstufe (3.1, 3.2...) mit einer Zuführleitung für eine Kunststoffschmelze (K) ausgerüstet ist und in jeder Werkzeugstufe (3.1, 3.2...) ein Kanalsystem (5) für die Verteilung der Kunststoffschmelze (K) bis in den Ringspaltraum (4) ausgebildet ist, **dadurch gekennzeichnet, daß** das Kanalsystem (5) jeder Werkzeugstufe (3.1, 3.2...) einen Eintrittsbereich (E), einen Verzweigungsbereich (V) und einen Spiralbereich (S) umfaßt, wobei der Spiralbereich (S) in einer ringförmigen Verteilfläche (309) mit einer ringförmigen Austrittsöffnung (309a) in den Ringspaltraum (4) mündet und der Eintrittsbereich (E), der Verzweigungsbereich (V) und der Spiralbereich (S) des Kanalsystems (5) sich jeweils in einer separaten Ebene erstrecken, wobei die Ebene (EE) des Eintrittsbereiches (E) sich zwischen der Ebene (EV) des Verzweigungsbereiches (V) und der Ebene (ES) des Spiralbereiches (S) erstreckt und das Kanalsystem des Eintrittsbereiches (E) mittels einer ersten Gruppe von Verbindungskanälen (51), die von der Ebene (EE) des Eintrittsbereiches in die Ebene (EV) des Verzweigungsbereiches führen, mit dem Kanalsystem des Verzweigungsbereiches (V) verbunden ist und das Kanalsystem des Verzweigungsbereiches (V) mittels einer zweiten Gruppe von Verbindungskanälen (53), die von der Ebene (EV) des Verzweigungsbereiches (V) in die Ebene (ES) des Spiralbereiches (S) führen, mit dem Kanalsystem des Spiralbereiches (S) verbunden ist.

2. Werkzeugkopf nach Anspruch 1, **dadurch gekennzeichnet, daß** der Eintrittsbereich (E) des Kanalsystems, der Verzweigungsbereich (V) des Kanalsystems und der Spiralbereich (S) des Kanalsystems einer Werkzeugstufe sich in zueinander parallel angeordneten Ebenen (EE, EV, ES) erstrecken.

3. Werkzeugkopf nach einem der Ansprüche 1 oder 2, **dadurch gekennzeichnet, daß** die Ebenen (EE, EV, ES) des Eintrittsbereiches (E), Verzweigungsbereiches (V) und Spiralbereiches (S) senkrecht zur Mittelachse (A) des Werkzeugkopfes (1) verlaufend angeordnet sind.

4. Werkzeugkopf nach einem der Ansprüche 1 bis 3, **dadurch gekennzeichnet, daß** die den Eintrittsbereich (E) des Kanalsystems mit dem Verzweigungsbereich (V) des Kanalsystems verbindenden Verbindungskanäle (51) der ersten Gruppe und die den Verzweigungsbereich (V) des Kanalsystems mit dem Spiralbereich (S) des Kanalsystems verbindenden Verbindungskanäle (53) der zweiten Gruppe senkrecht zu den Ebenen (EE, EV, ES) des Eintrittsbereiches (E), des Verzweigungsbereiches (V) und des Spiralbereiches (S) des Kanalsystems und koaxial zur Mittelachse (A) des Werkzeugkopfes (1) verlaufend ausgebildet sind.

5. Werkzeugkopf nach einem der Ansprüche 1 bis 4, **dadurch gekennzeichnet, daß** das Kanalsystem (5) mit Eintrittsbereich (E), Verzweigungsbereich (V) und Spiralbereich (S) sowie den beiden Gruppen von Verbindungskanälen (51, 53) nur in einem von den beiden Werkzeugteilen (30, 31) jeder Werkzeugstufe (3.1, 3.2...) ausgebildet ist.

6. Werkzeugkopf nach einem der Ansprüche 1 bis 5, **dadurch gekennzeichnet, daß** das Kanalsystem (5) mit Eintrittsbereich (E), Verzweigungsbereich (V), Spiralbereich (S) und den beiden Gruppen von Verbindungskanälen (51, 53) in dem der Düse (100) abgewandten, als unteres Werkzeugteil (30) bezeichneten Werkzeugteil einer jeden Werkzeugstufe (3.1, 3.2...) ausgebildet ist und das zweite als oberes Werkzeugteil (31) bezeichnete Werkzeugteil jeder Werkzeugstufe (3.1, 3.2...) auf die mit dem Spiralbereich (S) ausgebildete Oberfläche (300) des unteren Werkzeugteiles (30) unter Ausbildung der Trennfuge (6) aufgesetzt ist.

7. Werkzeugkopf nach einem der Ansprüche 1 bis 6, **dadurch gekennzeichnet, daß** der Spiralbereich (S) des Kanalsystems in der der Trennfuge (6) zugewandten Oberfläche (300) des unteren Werkzeugteiles (30), der Verzweigungsbereich (V) des Kanalsystems in der gegenüberliegenden, von der Trennfuge (6) abgewandten Oberfläche (301) des unteren Werkzeugteiles (30) und der Eintrittsbereich (E) des Kanalsystems zwischen diesen beiden Oberflächen (300, 301) innerhalb des unteren Werkzeugteiles (30) ausgebildet ist.

8. Werkzeugkopf nach einem der Ansprüche 1 bis 7, **dadurch gekennzeichnet, daß** das Kanalsystem des Spiralbereiches (S) von Spiralkanälen (54) gebildet ist und das Kanalsystem des Verzweigungsbereiches (V) von sich verzweigenden Verzweigungskanälen (52a, 52b) gebildet ist und die Spiralkanäle (54) und/oder die Verzweigungskanäle (52a, 52b) nutartig in die Oberflächen (300 bzw. 301) des unteren Werkzeugteiles (30) eingearbeitet sind.

9. Werkzeugkopf nach einem der Ansprüche 1 bis 8, **dadurch gekennzeichnet, daß** das mit dem Kanalsystem (5) ausgebildete untere Werkzeugteil (30) einer jeden Werkzeugstufe (3.1, 3.2...) auf der mit den Spiralkanälen (54) versehenen Oberfläche (300) gegenüberliegenden Oberfläche (301) mit einer umlaufenden Ringnut (302), die einen Nutgrund bildet, ausgebildet ist und in die Ringnut (302) ein Vorverteilring (7) einsetzbar ist, wobei der Vorverteilring (7) eine am Nutgrund der Ringnut (302) anliegende Oberfläche (701) aufweist und der Verzweigungsbereich (V) an der Oberfläche (301) des Werkzeugteiles (30) im Bereich des Nutgrundes der Ringnut (302) ausgebildet ist.

10. Werkzeugkopf nach Anspruch 9, **dadurch gekennzeichnet, daß** die den Verzweigungsbereich (V) bildenden Verzweigungskanäle einen Querschnitt aufweisen, wobei ein Teil ihres Querschnittes (52a, 52b) in der Oberfläche (301) des unteren Werkzeugteiles (30) im Bereich des Nutgrundes der Ringnut (302) und ein komplementärer Teil des Querschnittes (52a', 52b') auf der Oberfläche (701) des Vorverteilringes (7) im an dem Nutgrund der Ringnut (302) des unteren Werkzeugteiles (30) anliegenden Bereich ausgebildet ist.

11. Werkzeugkopf nach einem der Ansprüche 9 oder 10, **dadurch gekennzeichnet, daß** der Vorverteilring (7) eine größere Dicke aufweist als der Tiefe der Ringnut (302) des mit dem Kanalsystem ausgebildeten unteren Werkzeugteiles (30) entspricht, so daß der Vorverteilring (7) mit einem Teil seines Querschnittes über die Ringnut (302) in Richtung auf die sich anschließende Werkzeugstufe vorsteht und der vorstehende Teil des Vorverteilringes (7) in eine komplementär ausgebildete Ringnut an einer Oberseite (312) des oberen Werkzeugteiles (31) einer sich anschließenden nächsten Werkzeugstufe (3.1, 3.2, 3.3, 3.4) eingepaßt ist.

12. Werkzeugkopf nach einem der Ansprüche 1 bis 11, **dadurch gekennzeichnet, daß** der Eintrittsbereich (E) des Kanalsystems zwei V-förmig zueinander angeordnete und von einer Eintrittsöffnung (307) am Umfang des unteren Werkzeugteiles (30) ausgehende Eintrittskanäle (50) umfaßt, die mittig zur Mittelachse (A) einander gegenüberliegend enden und an den beiden Enden (50a) der Eintrittskanäle mit je einem zu dem Verzweigungsbereich (V) führenden Verbindungskanal (51) kommunizieren.

13. Werkzeugkopf nach einem der Ansprüche 1 bis 12, **dadurch gekennzeichnet, daß** ausgehend von den beiden von den Eintrittskanälen (50) ausgehenden Verbindungskanälen (51) im Verzweigungsbereich (V) zwei Verzweigungssysteme symmetrisch zueinander ausgebildet sind und jedes Verzweigungssystem sich in vier gleiche Verzweigungskanäle (52) verzweigt, und die acht Enden (55) der Verzweigungskanäle (52b) gleichmäßig auf einem koaxialen Kreisring zur Mittelachse (A) verteilt angeordnet sind und jeweils mit einem zu dem Spiralbereich (S) führenden Verbindungskanal (53) kommunizieren.

14. Werkzeugkopf nach einem der Ansprüche 1 bis 13, **dadurch gekennzeichnet, daß** der Spiralbereich (S) mehrere ineinanderliegend und radial von außen nach innen zum Ringspaltraum (4) konvergierend verlaufende Spiralkanäle (54) umfaßt, die mit jeweils einem vom Verzweigungsbereich (V) kommenden Verbindungskanal (53) an ihrem radial außen liegenden Ende kommunizieren und daß die Spiralkanäle (54) einen von außen nach innen abnehmenden Querschnitt für die durchströmende Kunststoffschmelze aufweisen.

15. Werkzeugkopf nach einem der Ansprüche 1 bis 14, **dadurch gekennzeichnet, daß** alle Strömungswege für die Kunststoffschmelze (K) durch das Kanalsystem (5) in einer Werkzeugstufe (3.1, 3.2...) von der Eintrittsöffnung (307) bis zur Austrittsöffnung (309a) in den Ringspaltraum (4) gleich lang ausgebildet sind.

16. Werkzeugkopf nach einem der Ansprüche 1 bis 15, **dadurch gekennzeichnet, daß** alle Werkzeugstufen (3.1, 3.2...) separat temperierbar sind.
